# EUROPEAN PATENT APPLICATION

(11) **EP 4 826 269 A1**
(43) Date of publication of application: **21.10.2026**
(21) Application number: 26158033.6
(22) Date of filing: 12.02.2026
(51) Int. Cl.: F16C 19/02, F16C 19/06, F16C 19/52, F16C 41/00, H01R 39/12, H01R 39/46, H02K 11/40

(54) **SHAFT GROUNDING MEMBER FOR ROLLING BEARING, AND ROLLING BEARING UNIT**

(30) Priority: 18.04.2025 JP 2025068815
(71) Applicant: NSK-WARNER K.K., Tokyo 141-8560 (JP)
(72) Inventor: SETOI, Mutsumi, Fukuroi-shi, Shizuoka, 437-8535 (JP); LUAN, Wenjing, Fukuroi-shi, Shizuoka, 437-8535 (JP)
(74) Representative: Berggren Oy

(57) **Abstract**

A shaft grounding member for a rolling bearing, the shaft grounding member being mounted on a rolling bearing unit including the rolling bearing in which one bearing ring is a fixed ring and the other bearing ring is a rotating ring, the shaft grounding member includes: a spring plate including an annular portion and at least one elastic portion that extends continuously from the annular portion in a radial direction, the spring plate being made of a thin plate of a conductive material; a soft conductive member mounted on a surface of the elastic portion that faces the rotating ring or a rotating member to which the rotating ring is fitted; and a flexible member mounted on a side surface of the annular portion. The soft conductive member is capable of abutting against at least a part of a surface of the rotating ring or at least a part of a surface of the rotating member.

## Description

### BACKGROUND

### 1. Field of the Invention

The present invention relates to a shaft grounding member for a rolling bearing that prevents occurrence of electrolytic corrosion or generation of electromagnetic noise of a rolling bearing in a rolling bearing unit, and the rolling bearing unit provided with the shaft grounding member for a rolling bearing.

### 2. Description of the Related Art

In recent years, there has been a progress in practical use of an electric vehicle in which an electric motor serving as a drive source is provided inside or in the vicinity of the wheels to drive the wheels. Such an electric motor is generally called an in-wheel motor. The general in-wheel motor has a structure in which a stator is fixed to a motor housing and a rotor is provided on the inner diameter side of the stator with a gap in the radial direction, and is a so-called inner rotor type motor. As a drive method for the in-wheel motor, a brushless DC motor driven by an inverter is often used in consideration of the performance and the control performance of the motor.

In the method of driving with the inverter, a potential difference occurs between the stator and the rotor due to the parasitic capacitance between the stator and the rotor. This potential difference generates a so-called shaft voltage and shaft current, and when this shaft current passes through the rolling bearing that supports the rotor, a phenomenon called "electrolytic corrosion" occurs that damages the rolling bearing.

Specifically, the current flows locally in the contact portion between the raceway surfaces of the outer ring and the inner ring of the rolling bearing and the rolling surfaces of the rolling elements, and the raceway surface or the rolling surface is melted and becomes uneven. This not only roughens the raceway surfaces and the rolling surfaces, causing the noise and the vibration, but also affects the life of the bearing if excessive electrolytic corrosion occurs.

In order to prevent the electrolytic corrosion of the rolling bearing, a conductive member is sometimes used. For example, JP2011-135720A and JP2011-135722A propose a conductive member including a contact body that electrically conducts with the rotor of the motor, an elastic body that presses the contact body toward the rotor, and a storage portion that stores the contact body and the elastic body, in which the storage portion is provided in a motor housing and electrically connected to the motor stator via the motor housing.

JP2020-127257A proposes a grounding device in which the distal end portion of a broom-shaped conductive fiber is brought into contact with the outer peripheral surface of a rotating shaft.

Further, JP2002-146568A proposes an electrolytic corrosion prevention device in which an annular seat portion in contact with the end surface of a bearing outer ring is bent into a wave washer shape, an elastic conductor including a contact piece that is extended from the inner side of the annular seat portion and that is in contact with the vicinity of the end surface center portion of the rotating shaft is used, and the surface of the annular seat portion is pressed by the lid-shaped wall of a bearing housing and electrically conducted in the state in which the contact piece abuts against the vicinity of the end surface center portion of the rotating shaft fitted to the bearing inner ring, and in which the annular seat portion is overlapped with the end surface of the bearing outer ring fitted in the bearing housing.

Further, JPH04-8820U proposes that a rod-shaped conductive brush is accommodated in a support hole formed in either one of two bearing rings, the distal end of the conductive brush is biased toward the other bearing ring and is brought into sliding contact with the other bearing ring by the elastic member, and the two bearing rings are electrically conducted.

JP2017-060401A proposes that the distal end portion of a shaft grounding brush made of a carbon filament abuts against an extension shaft, a shaft voltage generated in the shaft is grounded and removed, and electrolytic corrosion generated in a bearing is prevented.

In the bearing, measures against electromagnetic noise generated by electromagnetic interference are required, and various devices for preventing the generation of electromagnetic noise have been proposed. For example, JP2024-130948A proposes that a rod-shaped carbon brush having conductivity is accommodated between an inner ring and a metal ring, and the distal end of the carbon brush attached to the metal ring is biased against the inner ring by a spring and brought into sliding contact with the inner ring, thereby imparting conductivity performance to the conductive bearing and allowing a current flowing through the conductive bearing to flow outside the system via the metal ring and the brush to remove electromagnetic noise.

JP2023-018214A proposes a conductive device capable of releasing electromagnetic noise by preventing the generation of an oil film formed between a conductive rubber lip mounted on a rotating shaft and a metal housing by a centrifugal force or controlling the oil film thickness. By preventing the generation of an oil film or reducing the oil film thickness, it is possible to reduce the electrical resistance of the oil film and release electromagnetic noise from the rotating shaft to the housing.

JP2022-139252A proposes that a rolling element having conductivity is rolled between an outer ring and an inner ring in a state in which an oil film is cut to secure a path for charges, and the impedance between the outer ring and the inner ring or the impedance of the entire bearing is significantly reduced to improve the electromagnetic noise prevention effect and the electrolytic corrosion prevention effect.

JP2000-244180A proposes an electromagnetic noise prevention device in which a metal case of an electric motor and a rotating shaft in the electric motor are electrically conducted by a conduction unit such as a sliding contact member, so that electromagnetic noise induced in the rotating shaft is released to a metal electric motor housing grounded to a vehicle body.

However, in the technique described in any piece of the related arts, the abrasion powder generated from the conductive member may contaminate the lubricant or the grease composition sealed for lubrication and may damage the raceway surface or the rolling surface. The mating member of the conductive member may be damaged and the abrasion powder may be generated.

Specifically, in JP2011-135720A and JP2011-135722A, the contact body, the elastic body, and the storage body are metal members and are brought into sliding contact with one another due to the vibration of the motor, and thus the metal powder is generated. It is necessary to provide the contact body, the elastic body, and the storage body in the motor housing, and a space therefor is also required.

In JP2020-127257A, the distal end portion of the broom-shaped conductive fiber is brought into contact with the outer peripheral surface of the rotating shaft. However, in order to increase the contact area between the distal end portion of the broom-shaped conductive fiber and the rotating shaft as compared to when the distal end portion of the broom-shaped conductive fiber and the rotating shaft are simply brought into contact, the broom-shaped conductive fiber is brought into contact with the outer peripheral surface of the rotating shaft in the state of being bent. That is, since the distal end portion of the broom-shaped conductive fiber is in contact with the outer peripheral surface of the rotating shaft with a relatively strong pressing force, the abrasion powder is generated. At the same time, the outer peripheral surface of the rotating shaft, which is the mating member of the broom-shaped conductive fiber, is also damaged.

In JP2002-146568A, both the elastic conductor and the rotating shaft are made of metal, and the metal powder is generated when the elastic conductor and the rotating shaft come into sliding contact. At the same time, the end surface of the rotating shaft, which is the mating member of the elastic conductor, is damaged.

In JPH04-8820U, since the distal end of the rod-shaped conductive brush is in contact with the other bearing ring in the biased state, the abrasion powder of the conductive brush is generated. At the same time, the other bearing ring, which is the mating member of the conductive brush, is also damaged. Further, it is necessary to form a support hole for accommodating the conductive brush and the elastic member on the bearing ring, and a large load is applied to the bearing ring.

In JP2017-060401A, since the distal end portion of the shaft grounding brush made of the carbon filament abuts against the extension shaft, the abrasion powder of the shaft grounding brush is generated. At the same time, the extension shaft, which is the mating member of the shaft grounding brush, is also damaged.

In the bearing disclosed in the related arts excepting JP2000-244180A, frictional heat may be generated due to sliding contact between the conductive member and the mating member during use, and thus the durability of the bearing is reduced. Since the peripheral speed of the rotating member has been improved with the recent improvement in performance of the motor, further prevention of the temperature rise is required.

In JP2000-244180A, a wear-resistant member is selected as the sliding contact member, but the effect of reducing wear is not sufficient. Further, depending on the fixing method of the sliding contact member, vibration may also occur in the sliding contact member along with the rotation of the bearing member, and abnormal wear may occur in the sliding contact member and the fixing member that fixes the sliding contact member. This abnormal wear makes it difficult to ensure stable conductivity.

In the rolling bearing, as the rotating member rotates, a slight gap may be formed in a fitting surface between the fixed ring and the fixing member, and creep may occur. When creep occurs in the fixed ring, vibration or abnormal wear of the bearing may occur, and the function as the bearing may deteriorate.

In particular, when a different type of material such as aluminum different from the bearing material may be used for a housing or a rotating shaft as a fixing member to which the fixed ring is fitted, the fitting between the fixed ring and the fixing member is likely to be loosened due to a temperature change, and creep is likely to occur.

### SUMMARY

An object of the present invention is to provide a shaft grounding member for a rolling bearing that prevents the occurrence of electrolytic corrosion or the generation of electromagnetic noise in a rolling bearing and that can prevent the decrease in conductivity by being reliably fixed to a rolling bearing unit and can prevent the occurrence of rotational creep in a fixed ring, and the rolling bearing unit provided with the shaft grounding member.

The above object of the present invention is achieved by the following configurations [1] to [14].
[1] A shaft grounding member for a rolling bearing, the shaft grounding member being mounted on a rolling bearing unit including the rolling bearing in which one bearing ring is a fixed ring and the other bearing ring is a rotating ring, the shaft grounding member including: a spring plate including an annular portion and at least one elastic portion that extends continuously from the annular portion in a radial direction, the spring plate being made of a thin plate of a conductive material; a soft conductive member mounted on a surface of the elastic portion that faces the rotating ring or a rotating member to which the rotating ring is fitted; and a flexible member mounted on a side surface of the annular portion, in which the soft conductive member is capable of abutting against at least a part of a surface of the rotating ring or at least a part of a surface of the rotating member.
[2] The shaft grounding member for a rolling bearing according to [1], in which the flexible member has conductivity.
[3] The shaft grounding member for a rolling bearing according to [1], in which the flexible member is mounted on both side surfaces of the annular portion, and the flexible member mounted on at least one of the both side surfaces has conductivity.
[4] The shaft grounding member for a rolling bearing according to [1], in which the flexible member is made of at least one selected from a soft porous body selected from a nonwoven fabric, a woven fabric, and a sponge, and a resin-impregnated soft porous body.
[5] The shaft grounding member for a rolling bearing according to [1], in which the flexible member and the soft conductive member are a single member mounted on a side surface on the same side of the annular portion and the elastic portion.
[6] The shaft grounding member for a rolling bearing according to [1], in which the annular portion is electrically connected to the fixed ring or a fixing member to which the fixed ring is fixed.
[7] The shaft grounding member for a rolling bearing according to [1], in which the spring plate includes the annular portion and a plurality of the elastic portions extending in a radial shape continuously from the annular portion, and in which the plurality of elastic portions are bent toward the rotating ring.
[8] The shaft grounding member for a rolling bearing according to [1], in which the spring plate includes the annular portion and a plurality of the elastic portions extending in a radial shape continuously from the annular portion, and in which the plurality of elastic portions are formed flush with the annular portion.
[9] A rolling bearing unit including: an inner ring rotating type rolling bearing in which an outer ring is a fixed ring and an inner ring is a rotating ring; and the shaft grounding member for a rolling bearing according to any one of [1] to [8], in which the outer ring is fixed to a housing, and a shaft is fitted into the inner ring, and in which the annular portion is held between the outer ring and a pressing portion provided integrally with or separately from the housing.
[10] A rolling bearing unit including: an outer ring rotation type rolling bearing in which an inner ring is a fixed ring and an outer ring is a rotating ring; and the shaft grounding member for a rolling bearing according to any one of [1] to [8], in which the outer ring is fitted to a rotating member, and the inner ring is fixed to a fixing member, and in which the annular portion is held between the inner ring and a pressing portion provided integrally with or separately from a shaft.
[11] The shaft grounding member for a rolling bearing according to any one of [1] to [8], in which the rolling bearing is of an inner ring rotating type in which the fixed ring is an outer ring fixed to a housing and the rotating ring is an inner ring into which a shaft directly connected to a motor is fitted, in which the spring plate includes the annular portion and the elastic portion extending continuously from an inner peripheral side end portion of the annular portion to a center of the annular portion, and in which the soft conductive member is mounted on a surface of the elastic portion on a side facing the shaft and is capable of abutting against an end surface or a side surface of the shaft.
[12] The shaft grounding member for a rolling bearing according to [11], in which the elastic portion of the spring plate is bent in a middle.
[13] The shaft grounding member for a rolling bearing according to [11], in which the elastic portion of the spring plate is formed flush with the annular portion.
[14] A rolling bearing unit including: an inner ring rotating type rolling bearing in which an outer ring is a fixed ring and an inner ring is a rotating ring; and the shaft grounding member for a rolling bearing according to any one of [11] to [13], in which the outer ring is fixed to a housing, and a shaft is fitted into the inner ring, and in which the annular portion is held between the outer ring and a pressing portion provided integrally with or separately from the housing.

In the present invention, the shaft grounding member includes the flexible member having flexibility, the shaft grounding member is fixed to the rolling bearing unit in a state in which the flexible member is compressed, and the shaft grounding member can be reliably fixed by the force with which the flexible member is to be restored. Even when the fitting between the bearing unit and the shaft grounding member is loosened, the fixing can be maintained by the force with which the flexible member is to be restored. Therefore, it is possible to prevent a decrease in conductivity due to looseness of fixation of the shaft grounding member, occurrence of vibration, or the like, and it is possible to reduce a shaft voltage which is a potential difference between the rotating member and the fixing member, to prevent electrolytic corrosion of the rolling bearing, and to release electromagnetic noise through between the rotating member and the fixing member.

Since the pressure is always applied to the portion where the shaft grounding member is fixed by the force with which the flexible member is to be restored, the fixing member and the fixed ring of the bearing can be reliably fixed, and the rotational creep of the fixed ring can be prevented.

In the shaft grounding member according to the present invention, the soft conductive member is attached to the elastic portion of the spring plate and abuts against at least a part of the surface of the rotating ring or the rotating member. The biasing force of the soft conductive member to the rotating ring or the rotating member by the spring plate is not fairly large, and the abrasion powder is less likely to be generated. Further, since the soft conductive member is made of a soft material, damage to the rotating ring that is the mating member is also small.

The shaft grounding member according to the present invention can be used with the existing rolling bearing without requiring any processing on the rolling bearing and without the restriction on the type of the rolling bearing, and thus the versatility is fairly high. Further, the spring plate is a thin plate, and an increase in space for the bearing unit to be mounted can be minimized.

The bearing unit according to the present invention is provided with the shaft grounding member according to the present invention. Therefore, generation of the abrasion powder and damage to the mating member are prevented, reduction in durability due to generation of frictional heat can be prevented, and further, the bearing unit is highly versatile and does not require an increase in space.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
FIGS. 1A to 1C show an example of a shaft grounding member according to a first embodiment of the present invention applied to an inner ring rotating type bearing unit, in which FIG. 1A is a plan view thereof, FIG. 1B is a cross-sectional view taken along a line A-A in FIG. 1A, and FIG. 1C is an enlarged view showing a bent portion between an annular portion and an elastic portion in FIG. 1B;
FIG. 2 is a cross-sectional view showing an example of the bearing unit in which the shaft grounding member shown in FIG. 1 is incorporated;
FIG. 3 is a cross-sectional view corresponding to FIG. 1A, showing a shaft grounding member according to a modification of the present invention;
FIGS. 4A and 4B show an example of a shaft grounding member according to a second embodiment of the present invention applied to a bearing unit on the rotation side of an outer ring, in which FIG. 4A is a plan view thereof, and FIG. 4B is a cross-sectional view taken along a line A-A in FIG. 4A;
FIG. 5 is a cross-sectional view showing an example of the bearing unit in which the shaft grounding member shown in FIGS. 4A and 4B is assembled;
FIG. 6 is a cross-sectional view corresponding to FIG. 4A, showing a shaft grounding member according to a modification of the present invention;
FIG. 7 is a cross-sectional view showing an example of an inner ring rotating type bearing unit provided with a shaft grounding member according to a third embodiment of the present invention;
FIG. 8 is a cross-sectional view showing an example of an inner ring rotating type bearing unit provided with another shaft grounding member according to the third embodiment of the present invention;
FIG. 9 is a cross-sectional view showing an example of an outer ring rotating type bearing unit provided with a shaft grounding member according to a fourth embodiment of the present invention;
FIG. 10 is a cross-sectional view showing an example of an outer ring rotating type bearing unit provided with another shaft grounding member according to the fourth embodiment of the present invention;
FIGS. 11A to 11C show an example of a shaft grounding member according to a fifth embodiment of the present invention, in which FIG. 11A is a plan view thereof, FIG. 11B is a cross-sectional view taken along a line A-A in FIG. 11A, and FIG. 11C is an enlarged view showing a bent portion of an elastic portion in FIG. 11B;
FIG. 12 is a cross-sectional view showing an example of the bearing unit in which the shaft grounding member shown in FIGS. 11A to 11C is incorporated;
FIG. 13 is a cross-sectional view corresponding to FIG. 11A, showing a shaft grounding member according to a modification of the present invention;
FIGS. 14A and 14B show an example of a shaft grounding member according to a sixth embodiment of the present invention applied to an inner ring rotating type bearing unit, in which FIG. 14A is a perspective view thereof, and FIG. 14B is a plan view of FIG. 14A;
FIG. 15 shows an example of the bearing unit in which the shaft grounding member shown in FIGS. 14A and 14B is incorporated;
FIGS. 16A and 16B show an example of a shaft grounding member according to a seventh embodiment of the present invention applied to an outer ring rotating type bearing unit, in which FIG. 16A is a perspective view thereof, and FIG. 16B is a plan view of FIG. 16A;
FIG. 17 is a cross-sectional view showing an example of the bearing unit in which the shaft grounding member shown in FIGS. 16A and 16B is incorporated;
FIG. 18 is a cross-sectional view corresponding to FIG. 1B, showing a shaft grounding member according to a modification of the present invention;
FIG. 19 is a cross-sectional view corresponding to FIG. 4B, showing a shaft grounding member according to a modification of the present invention;
FIG. 20 is a cross-sectional view corresponding to FIG. 11B, showing a shaft grounding member according to a modification of the present invention;
FIG. 21 is a cross-sectional view showing an example of a bearing unit provided with the shaft grounding member shown in FIG. 18;
FIG. 22 is a cross-sectional view showing an example of a bearing unit provided with the shaft grounding member shown in FIG. 19; and
FIG. 23 is a cross-sectional view showing an example of a bearing unit provided with the shaft grounding member shown in FIG. 20.

### DETAILED DESCRIPTION OF THE INVENTION

Hereinafter, embodiments of the present invention will be described in detail with reference to the drawings. The present invention is not limited to the embodiments to be described below, and can be implemented by being freely changed without departing from the gist of the present invention. Hereinafter, a "shaft grounding member for a rolling bearing" is simply referred to as a "shaft grounding member", and a "rolling bearing unit" is simply referred to as a "bearing unit".

### First Embodiment: Shaft Grounding Member and Bearing Unit for Inner Ring Rotation

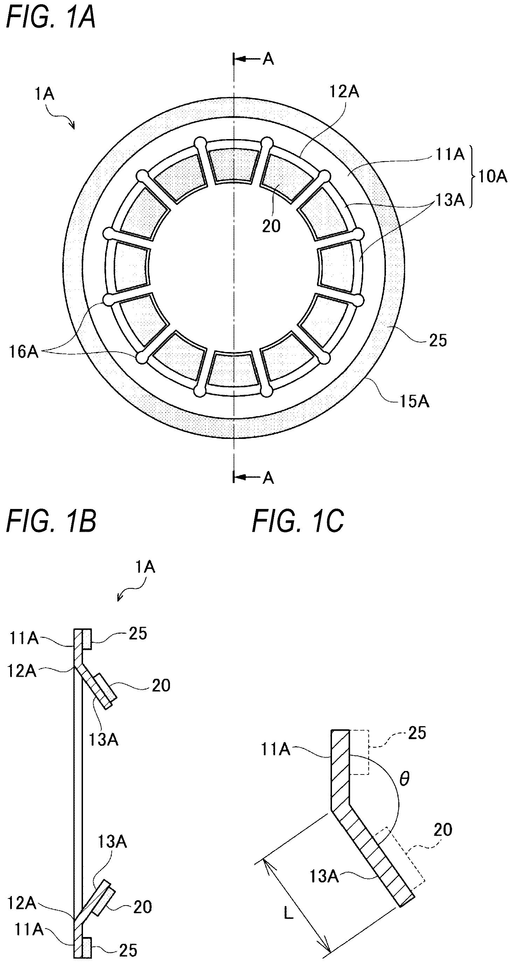

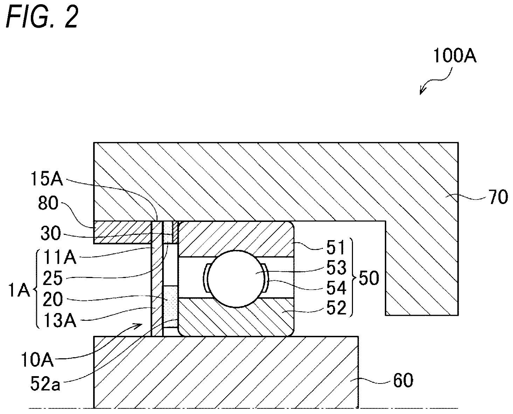

FIGS. 1A to 1C show an example of a shaft grounding member applied when a rotating ring is an inner ring, as a shaft grounding member according to the present invention. FIG. 1A is a plan view thereof, FIG. 1B is a cross-sectional view taken along a line A-A in FIG. 1A, and FIG. 1C is an enlarged view showing a bent portion between an annular portion and an elastic portion in FIG. 1B. FIG. 2 is a cross-sectional view showing an example of a bearing unit in which the shaft grounding member shown in FIGS. 1A to 1C is incorporated.

As shown in FIGS. 1A to 1C, a shaft grounding member 1A for inner ring rotation includes a spring plate 10A, a soft conductive member 20, and a flexible member 25. The spring plate 10A includes an annular portion 11A and a plurality of elastic portions 13A that are bent at an inner diameter side end portion 12A of the annular portion 11A and that extend in a radial shape continuously from the annular portion 11A toward the center in the radial direction. Further, notches 16A are formed on both sides of the bent portion of the elastic portion 13A with the annular portion 11A to maintain the bent state of the elastic portion 13A.

The spring plate 10A is entirely made of a thin plate made of a conductive material such as metal. When the conductive material is metal, stainless steel is preferable because stainless steel is easy to process and is less prone to rust.

The soft conductive member 20 is mounted on the surface on the bent side of each elastic portion 13A using an adhesive or the like.

As the soft conductive member 20, a member obtained by mixing or supporting a conductive material in a soft base material, or a commercially available member referred to as a "conductive sheet" or the like can be used. Examples of the soft base material include at least one selected from a porous body and a resin-impregnated porous body. As the porous body, paper, cloth, a nonwoven fabric, a resin sheet, a sponge which is a soft porous body, or the like can be used. Among these materials, as the base material, it is preferable to use at least one selected from a nonwoven fabric, a woven fabric and a soft porous body such as a sponge, and a resin-impregnated nonwoven fabric, a resin-impregnated woven fabric and a resin-impregnated soft porous body such as a sponge. When a resin-impregnated material obtained by impregnating a porous body with resin is used as the base material of the soft conductive member 20, the skeleton is coated with resin, thereby improving the strength of the soft conductive member 20 to a desired level while maintaining the soft characteristics. Therefore, in particular, it is more preferable to use, as the base material, at least one selected from a resin-impregnated nonwoven fabric, a resin-impregnated woven fabric and a resin-impregnated soft porous body such as a sponge.

When a resin-impregnated porous body is used as the base material, a thermosetting resin is preferably used as the resin with which the porous body is impregnated. The thermosetting resin may be any varnish-shaped resin that can be impregnated into the base material and that is thermosetting, and examples of the thermosetting resin include a phenol resin, a modified phenol resin, an epoxy resin, a modified epoxy resin, a polyimide resin, a silicone resin, a polyester resin, a polyurethane resin, and a rubber resin.

As the conductive material to be mixed into or supported on the soft base material, it is preferable to use at least one selected from metal fibers such as silver, copper, gold, aluminum, and stainless steel, pulverized products and powders thereof, conductive carbon fibers, and pulverized products and powders thereof.

The flexible member 25 is a member having the flexibility, and is attached to one side surface of the annular portion 11A of the spring plate 10A using an adhesive or the like. In the present embodiment, the flexible member 25 is mounted on the same side surface as the surface on which the soft conductive member 20 is mounted on the front and back surfaces of the spring plate 10A.

As the flexible member 25, at least one selected from a porous body and a resin-impregnated porous body is used. As the porous body, similarly to the base material of the soft conductive member 20, paper, cloth, a nonwoven fabric, a resin sheet, a sponge which is a soft porous body, or the like can be used. Among these materials, as the flexible member 25, it is preferable to use at least one selected from a nonwoven fabric, a woven fabric and a soft porous body such as a sponge, and a resin-impregnated nonwoven fabric, a resin-impregnated woven fabric and a resin-impregnated soft porous body such as a sponge. When a resin-impregnated material obtained by impregnating a porous body with resin is used as the flexible member 25, the skeleton is coated with resin, thereby improving the strength of the flexible member 25 to a desired level while maintaining the soft characteristics. Therefore, in particular, it is more preferable to use, as the base material, at least one selected from a resin-impregnated nonwoven fabric, a resin-impregnated woven fabric and a resin-impregnated soft porous body such as a sponge.

When a resin-impregnated porous body is used as the flexible member 25, a thermosetting resin is preferably used as the resin with which the porous body is impregnated. The thermosetting resin may be any varnish-shaped resin that can be impregnated into the base material and that is thermosetting, and examples of the thermosetting resin include a phenol resin, a modified phenol resin, an epoxy resin, a modified epoxy resin, a polyimide resin, a silicone resin, a polyester resin, a polyurethane resin, and a rubber resin.

The flexible member 25 may be a conductive member, and it is also possible to use a member in which the porous body and the resin-impregnated porous body described above are used as a base material and in which the conductive material described in the soft conductive member 20 is mixed into or supported on the base material, or a commercially available member called a "conductive sheet" or the like.

Therefore, the flexible member 25 having the conductivity may be made of the same material as the soft conductive member 20, or may be made of different materials. The thickness of the flexible member 25 may be the same as or different from that of the soft conductive member 20. For example, the thickness of the flexible member 25 may be larger than that of the soft conductive member 20 in order to improve the flexibility.

FIG. 2 shows a bearing unit 100A including a rolling bearing 50 on which the shaft grounding member 1A according to the first embodiment is mounted. The rolling bearing 50 includes an outer ring 51 which is a fixed ring constituting one bearing ring, an inner ring 52 which is a rotating ring constituting the other bearing ring, and a plurality of rolling elements (balls) 53 rollably held between the outer ring 51 and the inner ring 52 by a retainer 54. The outer ring 51 is fixed to a housing 70 which is a fixing member, and a shaft 60 which is a rotating member directly connected to a motor (not shown) is fitted into the inner diameter side of the inner ring 52. The rolling elements 53 are smoothly rolled by a lubricant in the bearing such as a lubricating oil or a grease composition.

The shaft grounding member 1A is mounted on the bearing unit 100A such that the soft conductive member 20 abuts against a side surface 52a of the inner ring 52. At this time, the annular portion 11A of the spring plate 10A is held between the outer ring 51 and a conductive pressing member 80 provided separately from the housing 70 via the conductive spacer 30. Therefore, the annular portion 11A of the spring plate 10A is fixed to the housing 70 in a state in which the side surface provided with the flexible member 25 faces the spacer 30 side. An outer peripheral end surface 15A of the annular portion 11A in the spring plate 10A is fixed in a state of abutting against the housing 70.

Accordingly, in the bearing unit 100A according to the first embodiment, first, a current from a motor (not shown) that drives the shaft 60 flows to the inner ring 52. Thereafter, the current flows from the soft conductive member 20 to the elastic portion 13A and the annular portion 11A of the spring plate 10A through the inner ring 52, and flows to the grounded housing 70 via the outer peripheral end surface 15A of the annular portion 11A and the pressing member 80. By grounding the shaft 60 and the housing 70 in this way, the inside of the bearing is not energized, and the shaft voltage, which is the potential difference between the shaft 60 and the housing 70, can be significantly reduced. Therefore, electrolytic corrosion of the rolling bearing 50 can be prevented, and electromagnetic noise can be released through between the shaft 60 and the housing 70.

When the flexible member 25 and the spacer 30 have the conductivity, the current flowing from the shaft 60 to the annular portion 11A also flows to the outer ring 51 side via the flexible member 25 and the spacer 30. Since the outer ring 51 has a large contact area with the housing 70, the current flowing through the outer ring 51 does not pass through the rolling element 53 and flows into the housing 70. Therefore, it is possible to further reduce the axial voltage, and to prevent electrolytic corrosion and reduce electromagnetic noise.

In the present embodiment, the shaft grounding member 1A includes the flexible member 25 having the flexibility, and the flexible member 25 is held and compressed by the pressing member 80 and the outer ring 51. Therefore, a restoring force is always generated in the flexible member 25, and pressure is applied to the annular portion 11A from both sides in the axial direction. Therefore, the shaft grounding member 1A can be reliably fixed. As a result, even when the shaft grounding member 1A is used for a long period of time, it is possible to prevent the occurrence of vibration, abnormal wear, and the like of the shaft grounding member 1A, to stabilize the contact state between the shaft grounding member 1A and the housing 70 or the bearing 50, and to secure sufficient and stable conductivity.

With the rotation of the shaft 60, a slight gap is generated in the fitting surface between the outer ring 51 and the housing 70, and thus creep may occur. However, in the present invention, due to a force with which the flexible member 25 is to be restored, pressure is applied to the annular portion 11A in the spring plate 10A of the shaft grounding member 1A, and pressure is also applied to the outer ring 51. Accordingly, the housing 70 and the outer ring 51 can be reliably fixed to each other, occurrence of rotational creep of the outer ring 51 can be prevented, and vibration and abnormal wear caused by rotational creep can be prevented.

In particular, in the bearing unit 100A in which the housing 70 is made of an aluminum material and the housing 70 and the outer ring 51 are made of different materials, a dimensional change amount due to a difference in thermal expansion coefficient between the housing 70 and the outer ring 51 is large, and creep or loosening of fitting is more likely to occur. Therefore, it is more significant that the pressing force of the flexible member 25 in the mounting portion of the shaft grounding member 1A is increased.

In the shaft grounding member 1A, the soft conductive member 20 can abut against the side surface 52a of the inner ring 52. The spring plate 10A is made of a thin plate and has the elasticity. Therefore, by pressing the annular portion 11A of the shaft grounding member 1A and the flexible member 25 against the outer ring 51 side, the elastic force due to the pressing acts on the elastic portion 13A, and the elastic portion 13A is pushed and expanded such that a bending angle θ shown in FIG. 1C increases. Accordingly, the portion of the soft conductive member 20 that is separated from the side surface 52a of the inner ring 52 in FIG. 2 also moves to the rolling bearing 50 side, and substantially the entire soft conductive member 20 comes into contact with the side surface 52a of the inner ring 52. Therefore, the conductivity between the soft conductive member 20 and the inner ring 52 can be improved, electrolytic corrosion of the rolling bearing 50 can be more effectively prevented, and electromagnetic noise can be more effectively reduced.

When mounted on the bearing unit 100A, the bending angle θ between the annular portion 11A and the elastic portion 13A may be appropriately set according to a length (L) of the elastic portion 13A and the size of the soft conductive member 20 such that the soft conductive member 20 abuts against the side surface 52a of the inner ring 52 of the rolling bearing 50. By the bending angle θ, the biasing force of the soft conductive member 20 to the side surface 52a of the inner ring 52 of the rolling bearing 50 can be adjusted. By decreasing the bending angle θ, the biasing force can be strengthened, and conversely, by increasing the bending angle θ, the biasing force can be weakened.

In the present embodiment, since the side surface 52a of the inner ring 52 is in contact with the soft conductive member 20, the side surface 52a of the inner ring 52 is not damaged, and the rotation torque of the inner ring 52 can be prevented from decreasing. Further, since the biasing force of the soft conductive member 20 to the side surface of the inner ring 52 by the spring plate 10A is not fairly large, generation of the abrasion powder can be prevented.

In the first embodiment, the outer peripheral end surface 15A of the annular portion 11A, the flexible member 25, and the spacer 30 abut against the housing 70. Alternatively, the outer peripheral end surface 15A of the annular portion 11A, the flexible member 25, and the spacer 30 may be held between the outer ring 51 and the pressing member 80 without abutting against the housing 70. In this case, since the current flowing through the annular portion 11A also flows to the housing 70 via the pressing member 80 or via the pressing member 80, the flexible member 25, the spacer 30, and the outer ring 51, the conductivity does not decrease.

The annular portion 11A of the shaft grounding member 1A may be directly pressed against the side surface of the outer ring 51 with the conductive spacer 30 interposed therebetween without providing the pressing member 80, and may be fixed in a manner of abutting against the housing 70.

The spacer 30 may have a thickness in consideration of the pressing amount of the spring plate 10A, the thicknesses of the soft conductive member 20 and the flexible member 25, and the like. The flexible member 25 of the shaft grounding member 1A may directly abut against the side surface of the outer ring 51 without providing the spacer 30.

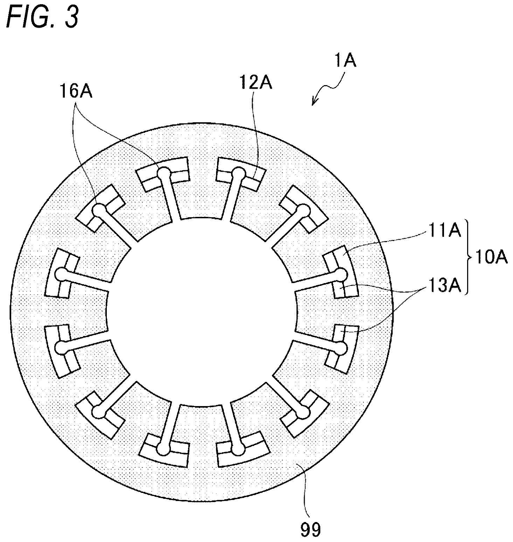

FIG. 3 is a view showing a modification of the shaft grounding member shown in FIG. 1. In this modification, the soft conductive member 20 and the flexible member 25 are implemented by a single member 99 mounted on a surface facing the inner ring 52 and the spacer 30.

In this way, since the flexible member 25 and the soft conductive member 20 form the single member 99, it is not necessary to separately manufacture the flexible member 25 and the soft conductive member 20, and thus the manufacturing cost can be reduced. The single member 99 constituting the flexible member 25 and the soft conductive member 20 can be bonded to the spring plate 10A at once with high accuracy, the workability of the bonding process is improved, and the shaft grounding member with stable quality can be supplied.

In the present embodiment, the single member 99 is bonded to the region excluding the peripheral edge portion of the notch 16A. Alternatively, the single member 99 may be bonded to the entire surface of the spring plate 10A. When the single member 99 is not bonded to the peripheral edge portion of the notch 16A, the bent state of the elastic portion 13A can be sufficiently maintained. On the other hand, when the single member 99 has the same shape as the spring plate 10A, the single member 99 is bonded to the shaft grounding member 1A, and then the shaft grounding member 1A is shaped, so that the manufacturing cost can be reduced.

### Second Embodiment: Shaft Grounding Member and Bearing Unit for Outer Ring Rotation

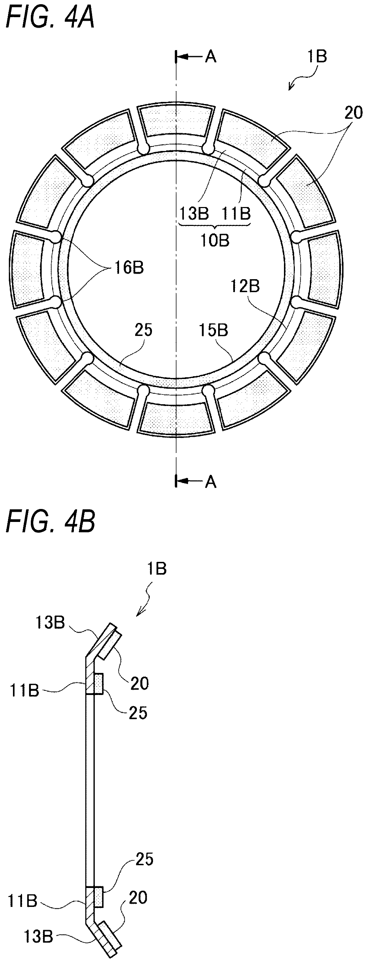

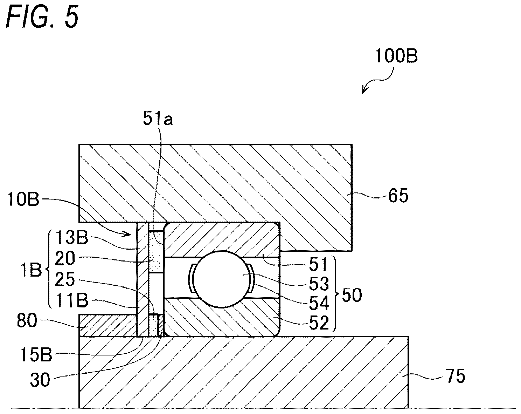

A case in which the inner ring 52 of the rolling bearing 50 is a rotating ring has been described in the first embodiment, and a bearing unit in which the outer ring 51 is a rotating ring will be described in a second embodiment. FIGS. 4A and 4B are views showing a shaft grounding member for outer ring rotation, in which FIG. 4A is a plan view thereof, and FIG. 4B is a cross-sectional view taken along a line A-A in FIG. 4A. FIG. 5 is a cross-sectional view showing an example of a bearing unit in which the shaft grounding member shown in FIGS. 4A and 4B is incorporated.

In the bearing unit according to the second embodiment, the same members as those in the first embodiment are denoted by the same reference signs, and the detailed description thereof will be omitted or simplified.

As shown in FIGS. 4A and 4B, a shaft grounding member 1B for outer ring rotation includes a spring plate 10B, the soft conductive member 20, and the flexible member 25. The spring plate 10B includes an annular portion 11B and a plurality of elastic portions 13B that are bent at an outer diameter side end portion 12B of the annular portion 11B and that extend in a radial shape continuously from the annular portion 11B toward the outer periphery in the radial direction. As shown in FIG. 5, when the elastic portion 13B is mounted on a bearing unit 100B, the elastic portion 13B is bent toward the right side in the figure in a manner of facing the outer ring 51 of the rolling bearing 50. Arc-shaped notches 16B are formed on both sides of the bent portion of the elastic portion 13B with the annular portion 11B.

As shown in FIG. 5, the bearing unit 100B according to the second embodiment includes the rolling bearing 50, and the shaft grounding member 1B shown in FIGS. 4A and 4B is mounted thereon. The inner ring 52 of the rolling bearing 50 is fixed to a fixing member 75, and a rotating member 65 is mounted on the outer ring 51.

The shaft grounding member 1B is mounted on the bearing unit 100B such that the soft conductive member 20 abuts against the side surface 51a of the outer ring 51.

The annular portion 11B of the shaft grounding member 1B is pressed against the side surface of the inner ring 52 by the pressing member 80 with the conductive spacer 30 interposed therebetween. Therefore, the inner peripheral end surface of the annular portion 11B in the spring plate 10B is fixed in a state of abutting against the fixing member 75, and the soft conductive member 20 can abut against the side surface of the outer ring 51.

In the second embodiment, a current from a motor (not shown) that drives the rotating member 65 flows through the outer ring 51. Thereafter, the current flows from the soft conductive member 20 to the elastic portion 13B and the annular portion 11B of the spring plate 10B through the outer ring 51, and flows to the grounded fixing member 75 via an inner peripheral end surface 15B of the annular portion 11B and the conductive pressing member 80. In this way, by grounding the rotating member 65 and the fixing member 75, the inside of the bearing is not energized, and the shaft voltage, which is the potential difference between the rotating member and the fixing member, can be significantly reduced. Therefore, electrolytic corrosion of the rolling bearing 50 can be prevented, and electromagnetic noise can be reduced.

Similarly to the first embodiment, when the flexible member 25 and the spacer 30 have the conductivity, the current flowing from the rotating member 65 to the annular portion 11B also flows to the inner ring 52 side via the flexible member 25 and the spacer 30. Since the inner ring 52 has a large contact area with the fixing member 75, the current flowing through the inner ring 52 flows to the fixing member 75 without passing through the rolling element 53. Therefore, it is possible to further reduce the axial voltage, and to prevent electrolytic corrosion and reduce electromagnetic noise.

Similarly to the first embodiment, the shaft grounding member 1B includes the flexible member 25 having the flexibility, and the flexible member 25 is held and compressed by the pressing member 80 and the inner ring 52. Therefore, a restoring force is always generated in the flexible member 25, and pressure is applied to the annular portion 11B from both sides in the axial direction. Therefore, the shaft grounding member 1B can be reliably fixed. As a result, even when the shaft grounding member 1B is used for a long period of time, it is possible to prevent the occurrence of vibration, abnormal wear, and the like of the shaft grounding member 1B, to stabilize the contact state between the shaft grounding member 1B and the fixing member 75 or the bearing 50, and to secure sufficient and stable conductivity.

Due to the force with which the flexible member 25 is to be restored, pressure is applied to the annular portion 11B in the spring plate 10B of the shaft grounding member 1B, and pressure is also applied to the inner ring 52. Therefore, the fixing member 75 and the inner ring 52 can be reliably fixed to each other, occurrence of rotational creep of the inner ring 52 can be prevented, and vibration and abnormal wear caused by rotational creep can be prevented.

In particular, in the bearing unit 100B in which the fixing member 75 is made of an aluminum material and the fixing member 75 and the inner ring 52 are made of different materials, a dimensional change amount due to a difference in thermal expansion coefficient between the fixing member 75 and the inner ring 52 is large, and creep or loosening of fitting is more likely to occur. Therefore, it is more significant that the pressing force of the flexible member 25 in the mounting portion of the shaft grounding member 1B is increased.

In the present embodiment, since the biasing force of the soft conductive member 20 to the side surface of the outer ring 51 by the spring plate 10B is not fairly large, the abrasion powder is less likely to be generated.

By adjusting the pressing force of the pressing member 80 against the outer ring 51 and increasing the contact area between the soft conductive member 20 and the side surface 51a of the outer ring 51, electrolytic corrosion of the rolling bearing 50 can be more effectively prevented.

In the present embodiment, the flexible member 25 of the shaft grounding member 1B may also directly abut against the side surface of the inner ring 52 without providing the spacer 30.

The inner peripheral end surface 15B of the annular portion 11B and the spacer 30 may abut against the fixing member 75 or may be held between the inner ring 52 and the pressing member 80 without abutting against the fixing member 75.

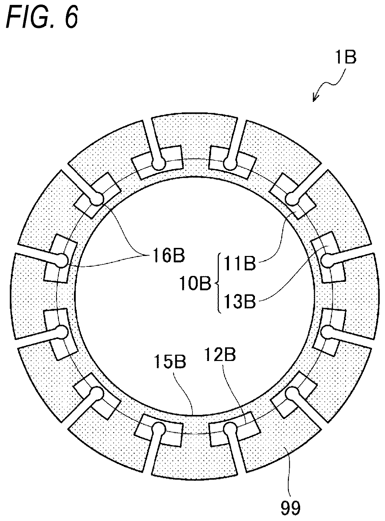

As a modification of the shaft grounding member according to the second embodiment, as shown in FIG. 6, the soft conductive member 20 and the flexible member 25 may be the single member 99 mounted on a surface facing the outer ring 51 and the spacer 30.

### Third Embodiment: Shaft Grounding Member and Bearing Unit for Inner Ring Rotation

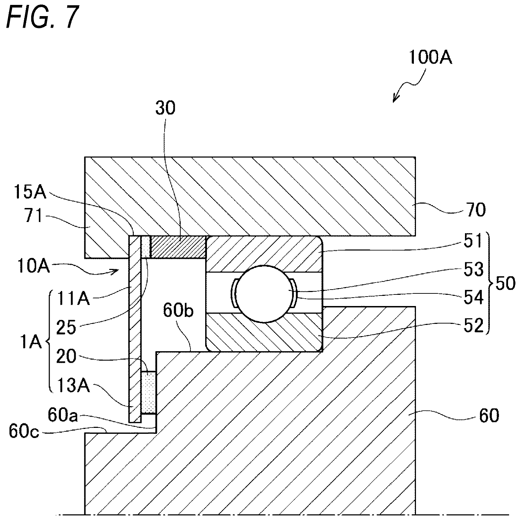

FIG. 7 shows a case in which the shaft grounding member 1A is mounted on a bearing unit whose rotating ring is an inner ring, similarly to the first embodiment. In the bearing unit according to a third embodiment, the same members as those in the first embodiment are denoted by the same reference signs, and the detailed description thereof will be omitted or simplified.

In the third embodiment, the shaft 60, which is a rotating member to which the inner ring 52 is fitted, is formed with a stepped surface 60c having a smaller diameter than a fitting surface 60b to which the inner ring 52 is fitted. The soft conductive member 20 abuts against the surface of the elastic portion 13A facing the shaft 60 in the axial direction, specifically, against a side surface 60a between the fitting surface 60b to which the inner ring 52 is fitted and the stepped surface 60c.

The shaft grounding member 1A is mounted on the housing 70 such that the elastic portion 13A is elastically deformed and the soft conductive member 20 abuts against the side surface 60a of the shaft 60. The annular portion 11A of the spring plate 10A is held by the outer ring 51 and a flange portion 71 protruding to the inner diameter side of the housing 70 via the conductive spacer 30. Therefore, the annular portion 11A of the spring plate 10A is fixed to the housing 70 in a state in which the side surface provided with the flexible member 25 faces the spacer 30 side. The outer peripheral end surface 15A of the annular portion 11A in the spring plate 10A is fixed in a state of abutting against the housing 70.

In the inner ring rotating type bearing unit 100A shown in FIG. 7, the current from the shaft 60 flows from the soft conductive member 20 to the elastic portion 13A and the annular portion 11A of the spring plate 10A through the side surface 60a of the shaft 60. Thereafter, the current flows to the grounded housing 70 via the outer peripheral end surface 15A of the annular portion 11A or the flange portion 71 of the housing 70. In this way, the shaft 60 which is the rotating member and the housing 70 which is the fixing member are grounded, so that the inside of the bearing is not energized, and the shaft voltage which is the potential difference between the rotating member and the fixing member can be significantly reduced. Therefore, electrolytic corrosion of the rolling bearing 50 can be prevented, and electromagnetic noise can be reduced.

When the flexible member 25 and the spacer 30 have the conductivity, the current flowing from the shaft 60 to the annular portion 11A also flows to the outer ring 51 side via the flexible member 25 and the spacer 30. Since the outer ring 51 has a large contact area with the housing 70, the current flowing through the outer ring 51 does not pass through the rolling element 53 and flows into the housing 70. Therefore, it is possible to further reduce the axial voltage, and to prevent electrolytic corrosion and reduce electromagnetic noise.

In the present embodiment, the shaft grounding member 1A includes the flexible member 25 having the flexibility, and the flexible member 25 is held and compressed by the flange portion 71 of the housing 70 and the outer ring 51. Therefore, a restoring force is always generated in the flexible member 25, and pressure is applied to the annular portion 11A from both sides in the axial direction. Therefore, the shaft grounding member 1A can be reliably fixed. As a result, even when the shaft grounding member 1A is used for a long period of time, it is possible to prevent the occurrence of vibration, abnormal wear, and the like of the shaft grounding member 1A, to stabilize the contact state between the shaft grounding member 1A and the housing 70 or the bearing 50, and to secure sufficient and stable conductivity.

Due to the force with which the flexible member 25 is to be restored, pressure is applied to the annular portion 11A in the spring plate 10A of the shaft grounding member 1A, and pressure is also applied to the outer ring 51. Therefore, the housing 70 and the outer ring 51 can be reliably fixed to each other, occurrence of rotational creep of the outer ring 51 can be prevented, and vibration and abnormal wear caused by rotational creep can be prevented.

In particular, in the bearing unit 100A in which the housing 70 is made of an aluminum material and the housing 70 and the outer ring 51 are made of different materials, a dimensional change amount due to a difference in thermal expansion coefficient between the housing 70 and the outer ring 51 is large, and creep or loosening of fitting is more likely to occur. Therefore, it is more significant that the pressing force of the flexible member 25 in the mounting portion of the shaft grounding member 1A is increased.

Similarly to the first embodiment, since the biasing force of the soft conductive member 20 to the side surface of the shaft 60 by the spring plate 10A is not fairly large, the abrasion powder is less likely to be generated.

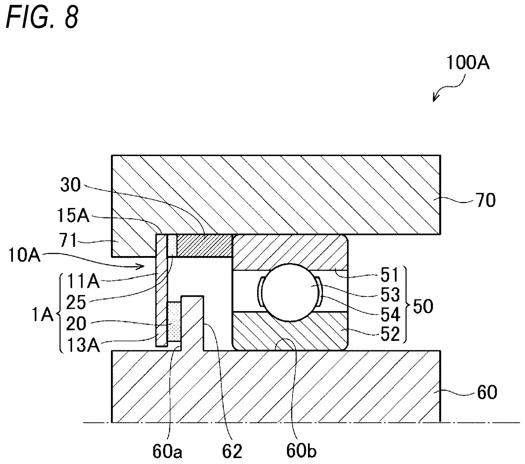

As shown in FIG. 8, in the present embodiment, the shaft 60 may be provided with a flange portion 62 that protrudes from the fitting surface 60b toward the outer diameter side, and the soft conductive member 20 may abut against the side surface 60a of the flange portion 62.

In particular, in the bearing unit 100A shown in FIG. 8, the position where the soft conductive member 20 is in contact with the side surface 60a of the shaft 60 has a smaller diameter than the position where the soft conductive member 20 is in contact with the side surface 52a of the inner ring 52 as shown in FIG. 2. Therefore, the circumferential speed of the side surface 60a of the shaft 60 can be reduced, and the generation of the abrasion powder and drag loss can be further reduced.

In the third embodiment, unlike the first embodiment, the shaft grounding member 1A is not in contact with the side surface 52a of the inner ring 52. Therefore, the design freedom of the rolling bearing, such as the attachment of the snap ring, can be improved.

### Fourth Embodiment: Shaft Grounding Member and Bearing Unit for Outer Ring Rotation

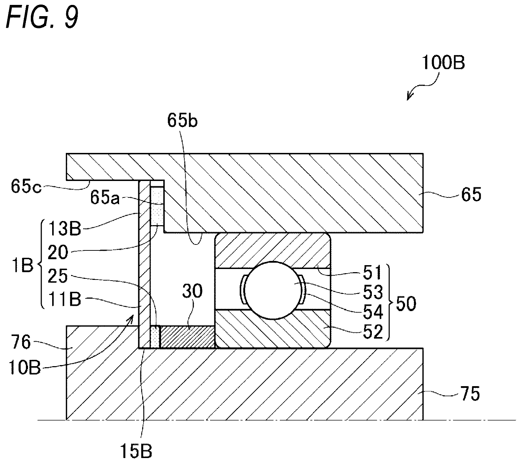

FIG. 9 shows a case in which the shaft grounding member 1B is mounted on a bearing unit whose rotating ring is the outer ring 51, similarly to the second embodiment. In the bearing unit according to a fourth embodiment, the same members as those in the second embodiment are denoted by the same reference signs, and the detailed description thereof will be omitted or simplified.

In the fourth embodiment, the rotating member 65 to which the outer ring 51 is fitted has a stepped surface 65c having a larger diameter than a fitting surface 65b to which the outer ring 51 is fitted. The soft conductive member 20 is mounted on a surface of the elastic portion 13B facing the rotating member 65 in the axial direction, specifically, a surface facing the side surface 65a between the fitting surface 65b to which the outer ring 51 is fitted and the stepped surface 65c. Therefore, the soft conductive member 20 can abut against the side surface 65a of the rotating member 65.

As shown in FIG. 9, in the outer ring rotating type bearing unit 100B, the soft conductive member 20 of the shaft grounding member 1B is mounted on the fixing member 75 in a manner of abutting against the side surface 65a of the rotating member 65. At this time, the annular portion 11B of the spring plate 10B is held between the inner ring 52 and a flange portion 76 of the fixing member 75 via the conductive spacer 30. Therefore, the annular portion 11B of the spring plate 10B is fixed to the fixing member 75 in a state in which the side surface on the side provided with the flexible member 25 faces the spacer 30 side. The inner peripheral end surface 15B of the annular portion 11A in the spring plate 10A is fixed in a state of abutting against the fixing member 75.

In the bearing unit 100B shown in FIG. 9, the current from a motor (not shown) that drives the rotating member 65 flows from the soft conductive member 20 to the grounded fixing member through the side surface 65a of the rotating member 65, through the elastic portion 13B and the annular portion 11B of the spring plate 10B, and through the inner peripheral end surface 15B of the annular portion 11B and the flange portion 76. In this way, by grounding the rotating member 65 and the fixing member 75, the inside of the bearing is not energized, and the shaft voltage, which is the potential difference between the rotating member and the fixing member, can be significantly reduced. Therefore, electrolytic corrosion of the rolling bearing 50 can be prevented, and electromagnetic noise can be reduced.

Here, similarly to the second embodiment, when the flexible member 25 and the spacer 30 have the conductivity, the current flowing from the rotating member 65 to the annular portion 11B also flows to the inner ring 52 side via the flexible member 25 and the spacer 30. Since the inner ring 52 has a large contact area with the fixing member 75, the current flowing through the inner ring 52 flows to the fixing member 75 without passing through the rolling element 53. Therefore, it is possible to further reduce the axial voltage, and to prevent electrolytic corrosion and reduce electromagnetic noise.

The shaft grounding member 1B includes the flexible member 25 having the flexibility, and the flexible member 25 is held and compressed by the flange portion 76 of the fixing member 75 and the inner ring 52. Therefore, a restoring force is always generated in the flexible member 25, and pressure is applied to the annular portion 11B from both sides in the axial direction. Therefore, the shaft grounding member 1B can be reliably fixed. As a result, even when the shaft grounding member 1B is used for a long period of time, it is possible to prevent the occurrence of vibration, abnormal wear, and the like of the shaft grounding member 1B, to stabilize the contact state between the shaft grounding member 1B and the fixing member 75 or the bearing 50, and to secure sufficient and stable conductivity.

Due to the force with which the flexible member 25 is to be restored, pressure is applied to the annular portion 11B in the spring plate 10B of the shaft grounding member 1B, and pressure is also applied to the inner ring 52. Therefore, the fixing member 75 and the inner ring 52 can be reliably fixed to each other, occurrence of rotational creep of the inner ring 52 can be prevented, and vibration and abnormal wear caused by rotational creep can be prevented.

In particular, in the bearing unit 100B in which the fixing member 75 is made of an aluminum material and the fixing member 75 and the inner ring 52 are made of different materials, a dimensional change amount due to a difference in thermal expansion coefficient between the fixing member 75 and the inner ring 52 is large, and creep or loosening of fitting is more likely to occur. Therefore, it is more significant that the pressing force of the flexible member 25 in the mounting portion of the shaft grounding member 1B is increased.

Similarly to the second embodiment, since the biasing force of the soft conductive member 20 to the side surface of the rotating member 65 by the spring plate 10B is not fairly large, the abrasion powder is less likely to be generated.

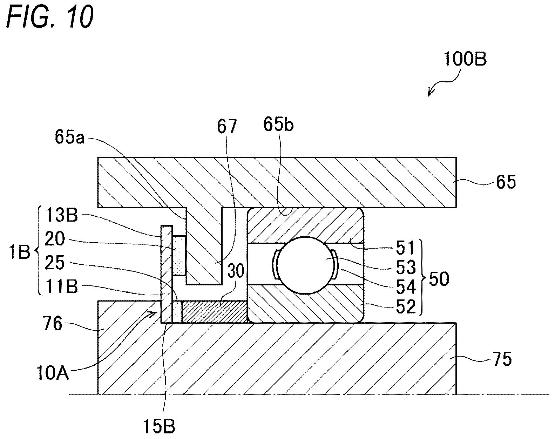

As shown in FIG. 10, in the present embodiment, the rotating member 65 may be provided with a flange portion 67 that protrudes from the fitting surface 65b toward the inner diameter side, and the soft conductive member 20 may abut against the side surface 65a of the flange portion 67.

In particular, in the bearing unit 100B shown in FIG. 10, the position where the soft conductive member 20 is in contact with the side surface 65a of the rotating member 65 has a smaller diameter than the position where the soft conductive member 20 is in contact with the side surface 51a of the outer ring 51 as shown in FIG. 5. Therefore, the circumferential speed of the side surface 65a of the rotating member 65 can be reduced, and the generation of the abrasion powder and drag loss can be further reduced.

In the fourth embodiment, unlike the second embodiment, the shaft grounding member 1B is not in contact with the side surface 51a of the outer ring 51. Therefore, the design freedom of the rolling bearing, such as the attachment of the snap ring, can be improved.

### Fifth Embodiment: Shaft Grounding Member and Bearing Unit for Inner Ring Rotation Including One Elastic Portion

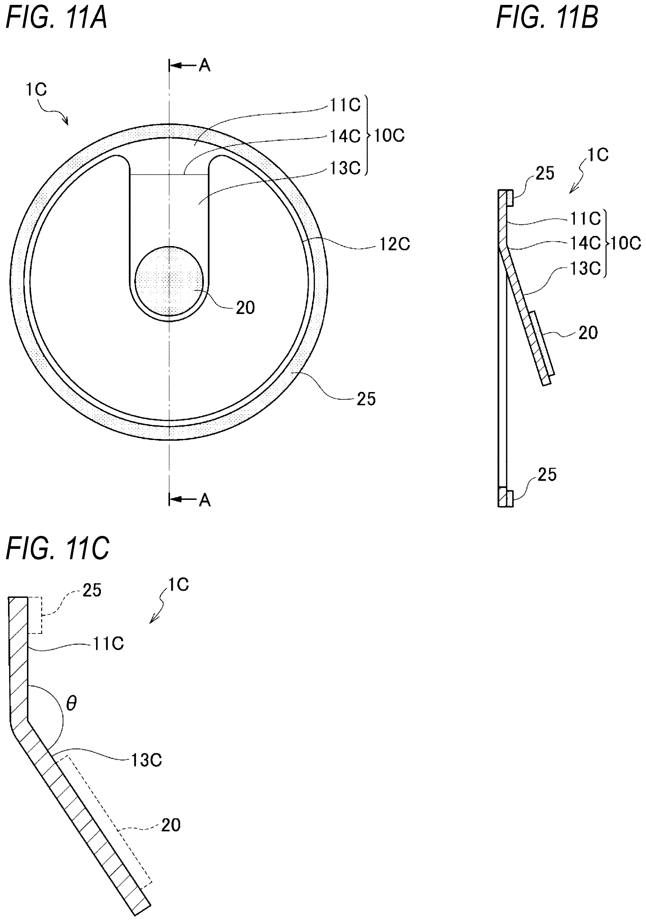

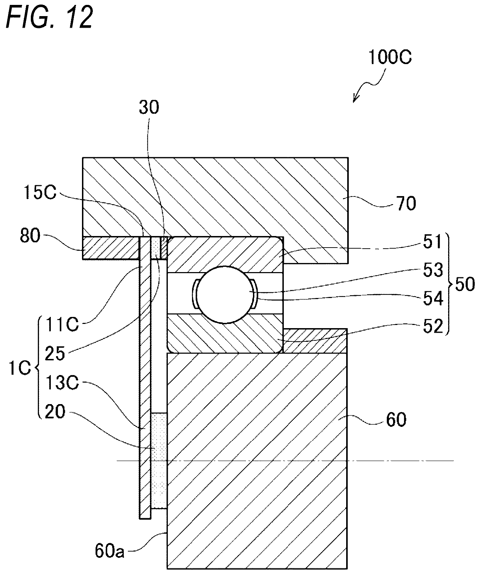

FIGS. 11A to 11C show an example of a shaft grounding member according to a fifth embodiment of the present invention, in which FIG. 11A is a plan view thereof, FIG. 11B is a cross-sectional view taken along a line A-A in FIG. 11A, and FIG. 11C is an enlarged view showing a bent portion between an annular portion and an elastic portion in FIG. 11B. FIG. 12 is a cross-sectional view showing an example of a bearing unit in which the shaft grounding member shown in FIGS. 11A to 11C is incorporated.

In the bearing unit according to the fifth embodiment, the same members as those in the first embodiment are denoted by the same reference signs, and the detailed description thereof will be omitted or simplified.

As shown in FIGS. 11A to 11C, a shaft grounding member 1C includes a spring plate 10C, the soft conductive member 20, and the flexible member 25. The spring plate 10C includes an annular portion 11C and one elastic portion 13C that is bent at an inner peripheral side end portion 12C of the annular portion 11C and that extends continuously from the annular portion 11C toward the center in the radial direction. The elastic portion 13C is bent from an elastic base portion 14C serving as a starting point. The soft conductive member 20 is bonded to the surface of the elastic portion 13C on the bent side, and the flexible member 25 is bonded to the surface of the annular portion 11C on the same side as the soft conductive member 20.

As shown in FIG. 12, the shaft grounding member 1C is mounted on a bearing unit 100C such that the soft conductive member 20 abuts against the side surface 60a of the shaft 60. At this time, the annular portion 11C of the spring plate 10C is held between the outer ring 51 and the conductive pressing member 80 provided separately from the housing 70 via the conductive spacer 30. Therefore, the annular portion 11C of the spring plate 10C is fixed to the housing 70 in a state in which the side surface provided with the flexible member 25 faces the spacer 30 side. An outer peripheral end surface 15C of the annular portion 11C in the spring plate 10C is fixed in a state of abutting against the housing 70.

In the fifth embodiment, a current from a motor (not shown) that drives the shaft 60 flows from the soft conductive member 20 to the elastic portion 13C and the annular portion 11C of the spring plate 10C, and flows to the grounded housing 70 via the outer peripheral end surface 15C of the annular portion 11C and the conductive pressing member 80. In this way, the shaft 60 which is the rotating member and the housing 70 which is the fixing member are grounded, so that the inside of the bearing is not energized, and the shaft voltage which is the potential difference between the rotating member and the fixing member can be significantly reduced. Therefore, electrolytic corrosion of the rolling bearing 50 can be prevented, and electromagnetic noise can be reduced.

When the flexible member 25 and the spacer 30 have the conductivity, the current flowing from the shaft 60 to the annular portion 11C also flows to the outer ring 51 side via the flexible member 25 and the spacer 30. Since the outer ring 51 has a large contact area with the housing 70, the current flowing through the outer ring 51 does not pass through the rolling element 53 and flows into the housing 70. Therefore, it is possible to further reduce the axial voltage, and to prevent electrolytic corrosion and reduce electromagnetic noise.

In the present embodiment, the shaft grounding member 1C includes the flexible member 25 having the flexibility, and the flexible member 25 is held and compressed by the pressing member 80 and the outer ring 51. Therefore, a restoring force is always generated in the flexible member 25, and pressure is applied to the annular portion 11C from both sides in the axial direction. Therefore, the shaft grounding member 1C can be reliably fixed. As a result, even when the shaft grounding member 1C is used for a long period of time, it is possible to prevent the occurrence of vibration, abnormal wear, and the like of the shaft grounding member 1C, to stabilize the contact state between the shaft grounding member 1C and the housing 70 or the bearing 50, and to secure sufficient and stable conductivity.

Due to the force with which the flexible member 25 is to be restored, pressure is applied to the annular portion 11C in the spring plate 10C of the shaft grounding member 1C, and pressure is also applied to the outer ring 51. Therefore, the housing 70 and the outer ring 51 can be reliably fixed to each other, occurrence of rotational creep of the outer ring 51 can be prevented, and vibration and abnormal wear caused by rotational creep can be prevented.

In particular, in the bearing unit 100C in which the housing 70 is made of an aluminum material and the housing 70 and the outer ring 51 are made of different materials, a dimensional change amount due to a difference in thermal expansion coefficient between the housing 70 and the outer ring 51 is large, and creep or loosening of fitting is more likely to occur. Therefore, it is more significant that the pressing force of the flexible member 25 in the mounting portion of the shaft grounding member 1C is increased.

Similarly to the first embodiment, since the biasing force of the soft conductive member 20 to the side surface of the shaft 60 by the spring plate 10C is not fairly large, the abrasion powder is less likely to be generated.

In the fifth embodiment, the outer peripheral end surface 15C of the annular portion 11C and the spacer 30 abut against the housing 70. Alternatively, the outer peripheral end surface 15C and the spacer 30 may be held between the outer ring 51 and the pressing member 80 without abutting against the housing 70. In this case, the current flowing through the annular portion 11C flows to the housing 70 via the outer ring 51 and the conductive pressing member 80. Since the outer ring 51 has a large contact area with the housing 70, the current flowing through the outer ring 51 does not pass through the rolling element 53 and flows into the housing 70.

In the bearing unit 100C, the soft conductive member 20 abuts against the side surface 60a of the shaft 60, and the peripheral speed is further reduced as compared with a case in which the soft conductive member 20 is in contact with the side surface of the inner ring 52. Therefore, it is possible to further reduce generation of the abrasion powder and drag loss as compared with other embodiments. Since the peripheral speed is lowest near the center of the shaft, it is more preferable that the soft conductive member 20 abuts near the center of the shaft.

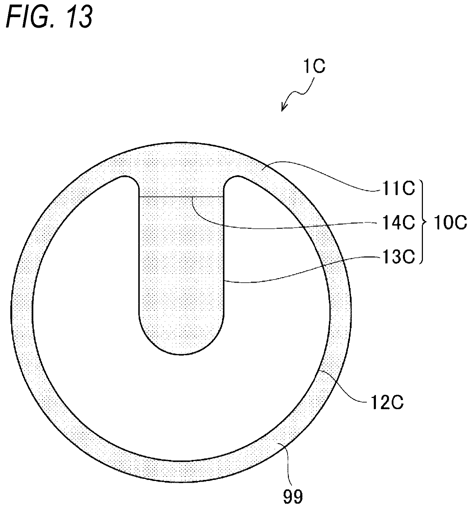

FIG. 13 is a view showing a modification of the shaft grounding member shown in FIGS. 11A to 11C. Therefore, in the present embodiment, the soft conductive member 20 and the flexible member 25 are also implemented by the single member 99 mounted on the surface facing the shaft 60 and the spacer 30.

### Sixth Embodiment: Shaft Grounding Member and Bearing Unit for Inner Ring Rotation Including Elastic Portion Bent in Axial Direction

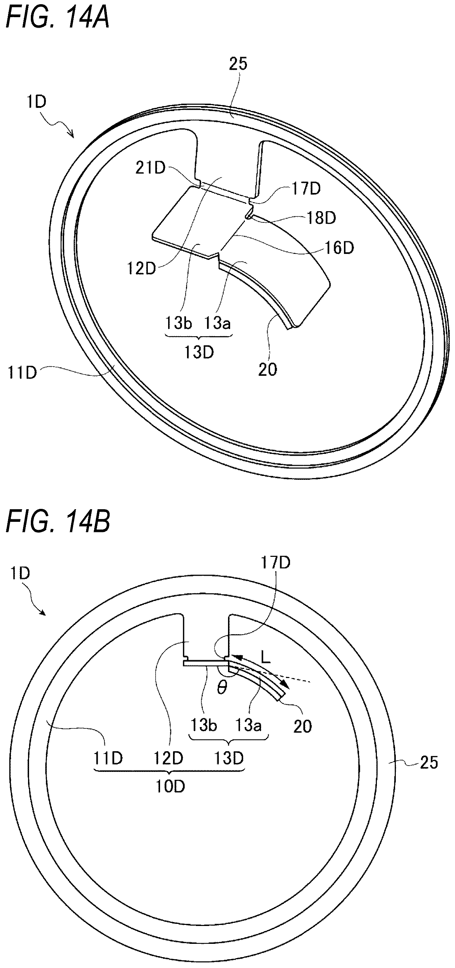

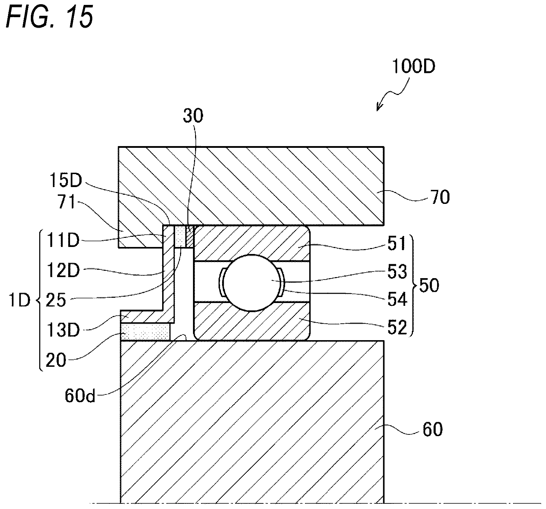

FIGS. 14A and 14B show an example of a shaft grounding member according to a sixth embodiment of the present invention, in which FIG. 14A is a perspective view thereof, and FIG. 14B is a plan view of FIG. 14A. FIG. 15 is a cross-sectional view showing an example of a bearing unit in which the shaft grounding member shown in FIGS. 14A and 14B is incorporated.

In the bearing unit according to the sixth embodiment, the same members as those in the first embodiment are denoted by the same reference signs, and the detailed description thereof will be omitted or simplified.

As shown in FIGS. 14A and 14B, a shaft grounding member 1D includes a spring plate 10D, the soft conductive member 20, and the flexible member 25. The spring plate 10D includes an annular portion 11D, one coupling portion 12D extending continuously from the annular portion 11D toward the center in the radial direction, and an elastic portion 13D bent from the distal end of the coupling portion 12D. The elastic portion 13D includes a first flat plate portion 13b extending in the axial direction of the rotating ring of the rolling bearing, and a curved plate portion 13a extending from the first flat plate portion 13b while curving along the circumferential direction of the shaft (the rotating member). That is, the elastic portion 13D extends in the circumferential direction with respect to the coupling portion 12D. The "axial direction of the rotating ring" is synonymous with the "axial direction of the rotating member".

A bent portion 21D extending linearly is formed between the coupling portion 12D and the first flat plate portion 13b, and notches 17D are formed on both sides of the bent portion 21D, so that the elastic portion 13D is easily bent. Notches 18D are formed on both sides of a boundary portion 16D between the first flat plate portion 13b and the curved plate portion 13a, so that the curved plate portion 13a is easily bent.

The flexible member 25 is mounted on the side where the elastic portion 13D provided with the soft conductive member 20 is bent on the front and back surfaces of the annular portion 11D in the spring plate 10D.

FIG. 15 shows a bearing unit 100D including the rolling bearing 50 on which the shaft grounding member 1D according to the fifth embodiment is mounted.

The soft conductive member 20 is mounted on the surface (the lower side in FIG. 15) of the elastic portion 13D of the spring plate 10D facing a peripheral surface 60d of the shaft 60.

The annular portion 11D of the spring plate 10D is held by the outer ring 51 and the flange portion 71 protruding to the inner diameter side of the housing 70 via the conductive spacer 30. Therefore, the annular portion 11D in the spring plate 10D is fixed to the housing 70 in a state in which the side surface provided with the flexible member 25 faces the spacer 30 side. An outer peripheral end surface 15D of the annular portion 11D in the spring plate 10D is fixed in a state of abutting against the housing 70. Therefore, the soft conductive member 20 can abut against at least a part of the peripheral surface 60d of the shaft 60.

In the bearing unit 100D implemented as described above, the current from a motor (not shown) that drives the shaft 60 flows from the peripheral surface 60d of the shaft 60 to the soft conductive member 20. Thereafter, the current flows to the elastic portion 13D, the coupling portion 12D, and the annular portion 11D of the spring plate 10D through the soft conductive member 20, and flows to the grounded housing 70 via the outer peripheral end surface 15D of the annular portion 11D and the flange portion 71. In this way, in the shaft grounding member 1D, since the shaft 60 which is the rotating member and the housing 70 which is the fixing member are grounded, the inside of the bearing is not energized, and the shaft voltage which is the potential difference between the shaft 60 and the housing 70 can be significantly reduced. Therefore, electrolytic corrosion of the rolling bearing 50 can be prevented, and electromagnetic noise can be released through between the shaft 60 and the housing 70.

When the flexible member 25 and the spacer 30 have the conductivity, the current flowing from the shaft 60 to the annular portion 11D also flows to the outer ring 51 side via the flexible member 25 and the spacer 30. Since the outer ring 51 has a large contact area with the housing 70, the current flowing through the outer ring 51 does not pass through the rolling element 53 and flows into the housing 70. Therefore, it is possible to further reduce the axial voltage, and to prevent electrolytic corrosion and reduce electromagnetic noise.

In the present embodiment, the shaft grounding member 1D includes the flexible member 25 having the flexibility, and the flexible member 25 is held and compressed by the flange portion 71 of the housing 70 and the outer ring 51. Therefore, a restoring force is always generated in the flexible member 25, and pressure is applied to the annular portion 11D from both sides in the axial direction. Therefore, the shaft grounding member 1D can be reliably fixed. As a result, even when the shaft grounding member 1D is used for a long period of time, it is possible to prevent the occurrence of vibration, abnormal wear, and the like of the shaft grounding member 1D, to stabilize the contact state between the shaft grounding member 1C and the housing 70 or the bearing 50, and to secure sufficient and stable conductivity.

Due to the force with which the flexible member 25 is to be restored, pressure is applied to the annular portion 11D in the spring plate 10D of the shaft grounding member 1D, and pressure is also applied to the outer ring 51. Therefore, the housing 70 and the outer ring 51 can be reliably fixed to each other, occurrence of rotational creep of the outer ring 51 can be prevented, and vibration and abnormal wear caused by rotational creep can be prevented.

In particular, in the bearing unit 100D in which the housing 70 is made of an aluminum material and the housing 70 and the outer ring 51 are made of different materials, a dimensional change amount due to a difference in thermal expansion coefficient between the housing 70 and the outer ring 51 is large, and creep or loosening of fitting is more likely to occur. Therefore, it is more significant that the pressing force of the flexible member 25 in the mounting portion of the shaft grounding member 1D is increased.

As shown in FIG. 14B, the first flat plate portion 13b and the curved plate portion 13a in the elastic portion 13D may be bent at the boundary portion therebetween. When the angle between the first flat plate portion 13b and the tangent line in the vicinity of the above-described boundary line in the curved plate portion 13a is defined as the bending angle θ, the bending angle θ may be appropriately set such that the soft conductive member 20 abuts against the peripheral surface 60d of the shaft 60. The biasing force of the soft conductive member 20 to the peripheral surface 60d of the shaft 60 can also be adjusted by the bending angle θ. Since the elastic portion 13D of the shaft grounding member 1D is elastically deformed by reducing the bending angle θ, the biasing force of the soft conductive member 20 to the shaft 60 can be increased. As a result, by reducing the gap between the shaft 60 and the peripheral surface 60d and increasing the contact area, the axial voltage between the rotating member and the fixing member can be stably reduced. Conversely, by increasing the bending angle θ, the biasing force can be reduced, and generation of the abrasion powder can be prevented. Further, an extension length L of the curved plate portion, the size of the soft conductive member 20, and the size of the curve of the curved plate portion 13a may also be appropriately set, and by adjusting the extension length L and the sizes, the above-described axial voltage can be further stably reduced.

Since the biasing force of the soft conductive member 20 to the peripheral surface 60d of the shaft 60 by the spring plate 10D is not fairly large, the abrasion powder is less likely to be generated.

In FIG. 15, the outer peripheral end surface 15D of the annular portion 11D and the spacer 30 abut against the housing 70, and may not abut against the housing 70.

The annular portion 11D and the spacer 30 may be held between the outer ring 51 and the flange portion 71 or a conductive pressing member replacing the flange portion 71. In this case, the current flowing through the annular portion 11D flows to the housing 70 via the outer ring 51 and the pressing member.

In FIGS. 14A and 14B, the curved plate portion 13a extends from one side of the first flat plate portion 13b, and may extend to both sides of the first flat plate portion 13b. The shape of the first flat plate portion 13b does not need to completely match the curved shape in the circumferential direction of the shaft.

Here, the thickness of the spacer 30 is not limited, and the flexible member 25 of the shaft grounding member 1D may directly abut against the side surface of the outer ring 51 without interposing the spacer 30 as long as the coupling portion 12D provided in the shaft grounding member 1D can be implemented so as not to come into contact with the inner ring 52.

### Seventh Embodiment: Shaft Grounding Member and Bearing Unit for Outer Ring Rotation Including Elastic Portion Bent in Axial Direction

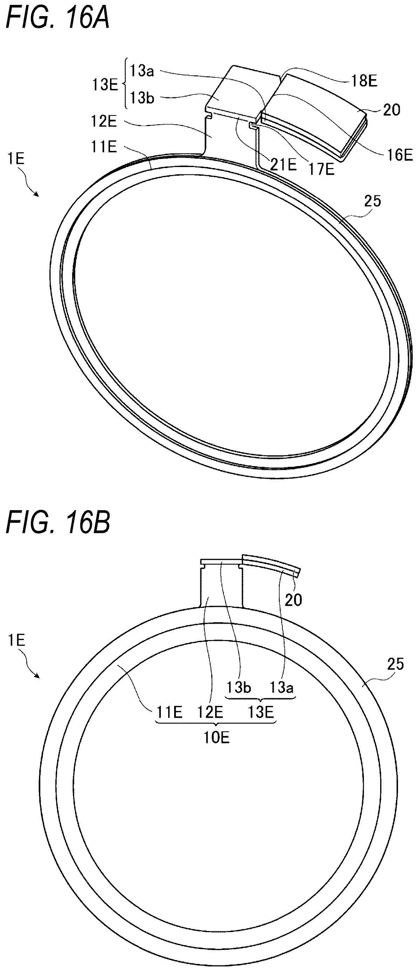

A case in which the inner ring 52 of the rolling bearing 50 is a rotating ring has been described in the sixth embodiment, and a bearing unit in which the outer ring 51 is a rotating ring will be described in a seventh embodiment. FIGS. 16A and 16B are views showing a shaft grounding member for outer ring rotation, in which FIG. 16A is a perspective view thereof, and FIG. 16B is a plan view of FIG. 16A.

In the bearing unit according to the seventh embodiment, the same members as those in the sixth embodiment are denoted by the same reference signs, and the detailed description thereof will be omitted or simplified.

As shown in FIGS. 16A and 16B, a shaft grounding member 1E for outer ring rotation includes a spring plate 10E, the soft conductive member 20, and the flexible member 25. The spring plate 10E includes an annular portion 11E, one coupling portion 12E extending continuously from the annular portion 11E toward the outer periphery in the radial direction, and an elastic portion 13E bent from the distal end of the coupling portion 12E. The elastic portion 13E includes the first flat plate portion 13b bent in the axial direction of the rotating member to be described later, and the curved plate portion 13a extending from the first flat plate portion 13b while curving along the circumferential direction of the rotating member 65.

The soft conductive member 20 is mounted on the surface of the curved plate portion 13a on the side facing an inner peripheral surface 65d of the rotating member 65, and the flexible member 25 is mounted on the surface of the annular portion 11E facing the inner ring using an adhesive or the like, and the spring plate 10E, the soft conductive member 20, and the flexible member 25 constitute the shaft grounding member 1E.

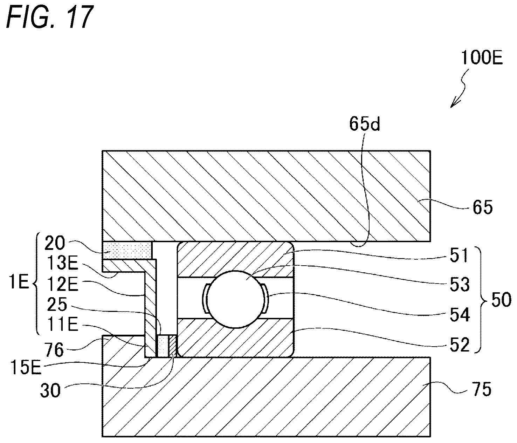

FIG. 17 shows a bearing unit 100E including the rolling bearing 50 on which the shaft grounding member 1E according to the seventh embodiment is mounted.

The inner ring 52 of the rolling bearing 50 is fixed to the fixing member 75, and the rotating member 65 is mounted on the outer ring 51.

The shaft grounding member 1E is mounted on the bearing unit 100E such that the soft conductive member 20 abuts against the inner peripheral surface 65d of the rotating member 65. At this time, the annular portion 11E of the spring plate 10E is held between the inner ring 52 and the flange portion 76 of the fixing member 75 via the conductive spacer 30. Therefore, the annular portion 11E of the spring plate 10E is fixed to the fixing member 75 in a state in which the side surface provided with the flexible member 25 faces the spacer 30 side. An inner peripheral end surface 15E of the annular portion 11E in the spring plate 10E is fixed in a state of abutting against the fixing member 75, and the soft conductive member 20 is fixed in a state of abutting against the inner peripheral surface 65d of the rotating member 65.

Accordingly, in the bearing unit 100E according to the seventh embodiment, first, a current from a motor (not shown) that drives the rotating member 65 flows through the soft conductive member 20. Thereafter, the current flows to the elastic portion 13E, the coupling portion 12E, and the annular portion 11E of the spring plate 10E through the soft conductive member 20, and flows to the grounded fixing member 75 via the inner peripheral end surface 15E of the annular portion 11E and the flange portion 76. In this way, by grounding the rotating member 65 and the fixing member 75, the inside of the bearing is not energized, and the shaft voltage, which is the potential difference between the rotating member and the fixing member, can be significantly reduced. Therefore, electrolytic corrosion of the rolling bearing 50 can be prevented, and electromagnetic noise can be reduced.

When the flexible member 25 and the spacer 30 have the conductivity, the current flowing from the rotating member 65 to the annular portion 11E also flows to the inner ring 52 side via the flexible member 25 and the spacer 30. Since the inner ring 52 has a large contact area with the fixing member 75, the current flowing through the inner ring 52 flows to the fixing member 75 without passing through the rolling element 53. Therefore, it is possible to further reduce the axial voltage, and to prevent electrolytic corrosion and reduce electromagnetic noise.

In the present embodiment, the shaft grounding member 1E includes the flexible member 25 having the flexibility, and the flexible member 25 is held and compressed by the flange portion 76 of the fixing member 75 and the inner ring 52. Therefore, a restoring force is always generated in the flexible member 25, and pressure is applied to the annular portion 11E from both sides in the axial direction. Therefore, the shaft grounding member 1E can be reliably fixed. As a result, even when the shaft grounding member 1E is used for a long period of time, it is possible to prevent the occurrence of vibration, abnormal wear, and the like of the shaft grounding member 1E, to stabilize the contact state between the shaft grounding member 1E and the fixing member 75 or the bearing 50, and to secure sufficient and stable conductivity.

Due to the force with which the flexible member 25 is to be restored, pressure is applied to the annular portion 11E in the spring plate 10E of the shaft grounding member 1E, and pressure is also applied to the inner ring 52. Therefore, the fixing member 75 and the inner ring 52 can be reliably fixed to each other, occurrence of rotational creep of the inner ring 52 can be prevented, and vibration and abnormal wear caused by rotational creep can be prevented.

In particular, in the bearing unit 100E in which the fixing member 75 is made of an aluminum material and the fixing member 75 and the inner ring 52 are made of different materials, a dimensional change amount due to a difference in thermal expansion coefficient between the fixing member 75 and the inner ring 52 is large, and creep or loosening of fitting is more likely to occur. Therefore, it is more significant that the pressing force of the flexible member 25 in the mounting portion of the shaft grounding member 1E is increased.

Similarly to the sixth embodiment, since the biasing force of the soft conductive member 20 to the inner peripheral surface 65d of the rotating member 65 by the spring plate 10E is not fairly large, the abrasion powder is less likely to be generated.

Similarly to the sixth embodiment, by appropriately setting the bending angle between the curved plate portion 13a and the first flat plate portion 13b in FIG. 16B, the biasing force to the inner peripheral surface 65d of the rotating member 65 can be adjusted. Accordingly, the effect of reducing the shaft voltage between the rotating member 65 and the fixing member 75 and the effect of preventing generation of the abrasion powder can be further improved. The extension length of the curved plate portion 13a, the size of the soft conductive member 20, and the size of the curve of the curved plate portion 13a may also be appropriately set, and by adjusting the extension length and the sizes, the above-described axial voltage can be further stably reduced.

In the seventh embodiment, the inner peripheral end surface 15E of the annular portion 11E and the spacer 30 abut against the fixing member 75, and may not abut against the fixing member 75.

The annular portion 11E and the spacer 30 may be held between the inner ring 52 and the flange portion 76 or a conductive pressing member replacing the flange portion 76. In this case, the current flowing through the annular portion 11E flows to the fixing member 75 via the inner ring 52 and the pressing member.

In common to the sixth embodiment and the seventh embodiment, the number of coupling portions is not limited to one, and may be plural. In the shaft grounding members 1D and 1E, the areas of the elastic portions 13D and 13E can be freely designed, and the number and size of the coupling portions 12D and 12E can also be freely designed.

The present invention is not limited to the above embodiments, and may be modified and improved as appropriate.

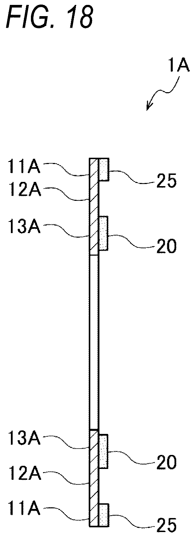

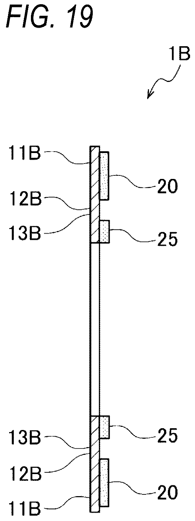

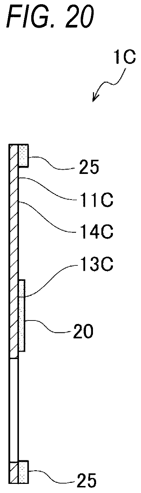

For example, in the above embodiments, the elastic portions 13A, 13B, and 13C of the spring plates 10A, 10B, and 10C are bent toward the rotating ring. Alternatively, the elastic portions 13A, 13B, and 13C may also be formed flush with the annular portions 11A, 11B, and 11C without being bent at the inner diameter side end portion 12A, the outer diameter side end portion 12B, and the elastic base portion 14C. For example, in the case of the shaft grounding member 1A for inner ring rotation shown in FIGS. 1A to 1C, as shown in FIG. 18, the annular portion 11A and the elastic portion 13A may be linearly continuous in the cross-sectional view. For example, in the case of the shaft grounding member 1B for outer ring rotation shown in FIGS. 4A and 4B, as shown in FIG. 19, the annular portion 11B and the elastic portion 13B may be linearly continuous in the cross-sectional view. Further, for example, in the case of the shaft grounding member 1C shown in FIGS. 11A to 11C, as shown in FIG. 20, the annular portion 11C and the elastic portion 13C may be linearly continuous in the cross-sectional view.

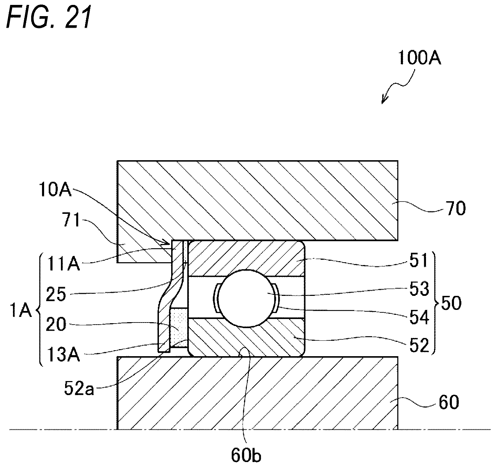

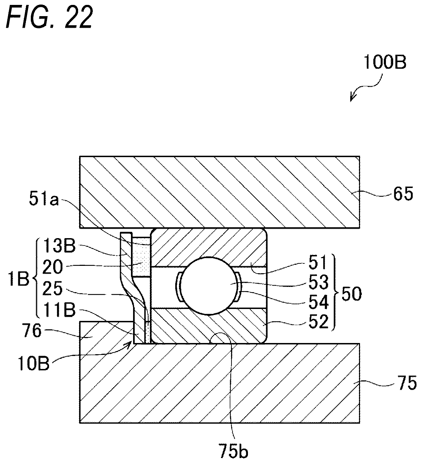

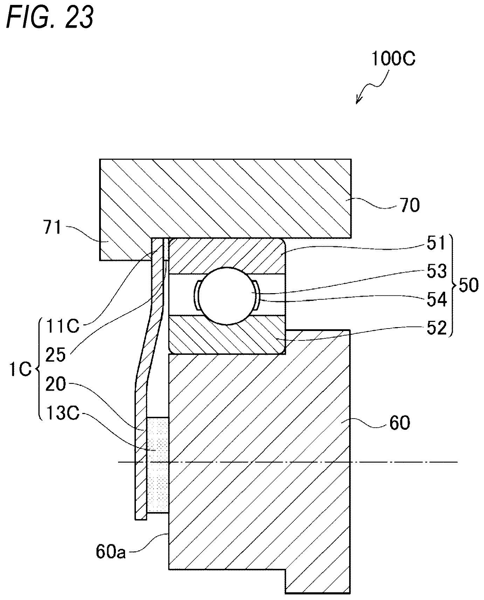

Therefore, in the bearing units 100A and 100C shown in FIGS. 21 and 23, when the annular portion 11A of the shaft grounding member 1A and the annular portion 11C of the shaft grounding member 1C are held between the flange portion 71 of the housing 70 and the side surface of the outer ring 51, the elastic portion 13A of the shaft grounding member 1A and the elastic portion 13C of the shaft grounding member 1C are elastically deformed by an amount equal to the thickness of the soft conductive member 20, and the soft conductive member 20 abuts against the side surface 52a of the inner ring 52 and the side surface 60a of the shaft 60 by the bending reaction force of the spring plates 10A and 10C. In the bearing unit 100B shown in FIG. 22, when the annular portion 11B of the shaft grounding member 1B is held between the flange portion 76 of the fixing member 75 and the side surface of the inner ring 52, the elastic portion 13B of the shaft grounding member 1B is elastically deformed by an amount equal to the thickness of the soft conductive member 20, and the soft conductive member 20 abuts against the side surface 51a of the outer ring 51 by the bending reaction force of the spring plate 10B. Accordingly, the same function as that of the above embodiment can be achieved.

In this case, since bending of the spring plates 10A, 10B, and 10C is not required, the shaft grounding members 1A, 1B, and 1C can be manufactured at low cost, and the spring plates 10A, 10B, and 10C and the soft conductive member 20 can be bonded together easily.

In common to all the embodiments, the planar shape of the soft conductive member 20 is not limited. In addition to the fan shape shown in FIG. 1A, a rectangle may be used. A plurality of small pieces may be used.

The shaft grounding member according to the present invention can also be suitably used in the case of achieving only one of prevention of electrolytic corrosion and prevention of generation of electromagnetic noise.

In the present embodiment, the flexible member is mounted on the same side surface of the annular portion as the surface on which the soft conductive member is mounted, and may be mounted on a side surface opposite to the surface on which the soft conductive member is mounted, or may be mounted on both side surfaces. The flexible member may not have the conductivity as long as the current flows from the annular portion to the housing.

When the flexible member is mounted on both side surfaces of the annular portion, at least one of the flexible members has the conductivity. In this way, by mounting the flexible member on the both side surfaces of the annular portion, the restoring force of the flexible member is improved, and the deformation amount is increased, so that the effect of the present invention can be further improved.

## Claims

1. A shaft grounding member for a rolling bearing, the shaft grounding member being mounted on a rolling bearing unit including the rolling bearing in which one bearing ring is a fixed ring and the other bearing ring is a rotating ring, the shaft grounding member comprising:
a spring plate including an annular portion and at least one elastic portion that extends continuously from the annular portion in a radial direction, the spring plate being made of a thin plate of a conductive material;
a soft conductive member mounted on a surface of the elastic portion that faces the rotating ring or a rotating member to which the rotating ring is fitted; and
a flexible member mounted on a side surface of the annular portion,
wherein the soft conductive member is capable of abutting against at least a part of a surface of the rotating ring or at least a part of a surface of the rotating member.

2. The shaft grounding member for a rolling bearing according to claim 1,
wherein the flexible member has conductivity.

3. The shaft grounding member for a rolling bearing according to claim 1,
wherein the flexible member is mounted on both side surfaces of the annular portion, and the flexible member mounted on at least one of the both side surfaces has conductivity.

4. The shaft grounding member for a rolling bearing according to claim 1,
wherein the flexible member is made of at least one selected from a soft porous body selected from a nonwoven fabric, a woven fabric, and a sponge, and a resin-impregnated soft porous body.

5. The shaft grounding member for a rolling bearing according to claim 1,
wherein the flexible member and the soft conductive member are a single member mounted on a side surface on the same side of the annular portion and the elastic portion.

6. The shaft grounding member for a rolling bearing according to claim 1,
wherein the annular portion is electrically connected to the fixed ring or a fixing member to which the fixed ring is fixed.

7. The shaft grounding member for a rolling bearing according to claim 1,
wherein the spring plate includes the annular portion and a plurality of the elastic portions extending in a radial shape continuously from the annular portion, and
wherein the plurality of elastic portions are bent toward the rotating ring.

8. The shaft grounding member for a rolling bearing according to claim 1,
wherein the spring plate includes the annular portion and a plurality of the elastic portions extending in a radial shape continuously from the annular portion, and
wherein the plurality of elastic portions are formed flush with the annular portion.

9. A rolling bearing unit comprising:
an inner ring rotating type rolling bearing in which an outer ring is a fixed ring and an inner ring is a rotating ring; and
the shaft grounding member for a rolling bearing according to any one of claims 1 to 8,
wherein the outer ring is fixed to a housing, and a shaft is fitted into the inner ring, and
wherein the annular portion is held between the outer ring and a pressing portion provided integrally with or separately from the housing.

10. A rolling bearing unit comprising:
an outer ring rotation type rolling bearing in which an inner ring is a fixed ring and an outer ring is a rotating ring; and
the shaft grounding member for a rolling bearing according to any one of claims 1 to 8,
wherein the outer ring is fitted to a rotating member, and the inner ring is fixed to a fixing member, and
wherein the annular portion is held between the inner ring and a pressing portion provided integrally with or separately from a shaft.

11. The shaft grounding member for a rolling bearing according to claim 1,
wherein the rolling bearing is of an inner ring rotating type in which the fixed ring is an outer ring fixed to a housing and the rotating ring is an inner ring into which a shaft directly connected to a motor is fitted,
wherein the spring plate includes the annular portion and the elastic portion extending continuously from an inner peripheral side end portion of the annular portion to a center of the annular portion, and
wherein the soft conductive member is mounted on a surface of the elastic portion on a side facing the shaft and is capable of abutting against an end surface or a side surface of the shaft.

12. The shaft grounding member for a rolling bearing according to claim 11,
wherein the elastic portion of the spring plate is bent in a middle.

13. The shaft grounding member for a rolling bearing according to claim 11,
wherein the elastic portion of the spring plate is formed flush with the annular portion.

14. A rolling bearing unit comprising:
an inner ring rotating type rolling bearing in which an outer ring is a fixed ring and an inner ring is a rotating ring; and
the shaft grounding member for a rolling bearing according to any one of claims 11 to 13,
wherein the outer ring is fixed to a housing, and a shaft is fitted into the inner ring, and
wherein the annular portion is held between the outer ring and a pressing portion provided integrally with or separately from the housing.
